# DEMANDE DE BREVET EUROPEEN

(11) **EP 3 763 427 A1**
(43) Date de publication de la demande: **13.01.2021**
(21) Numéro de dépôt: 20185403.1
(22) Date de dépôt: 13.07.2020
(51) Int. Cl.: B01D 3/00, D06F 43/08, D06F 58/24, F24H 8/00

(54) **SYSTÈME DE RÉCUPÉRATION THERMIQUE D'UN CONDENSEUR DE DISTILLATION ET PROCÉDÉ ASSOCIÉ**

(30) Priorité: 11.07.2019 FR 1907830
(71) Demandeur: Commissariat à l'Energie Atomique et aux Energies Alternatives, 75015 Paris (FR)
(72) Inventeur: DUMOULIN, Pierre, 38054 GRENOBLE (FR); MONTZIEUX, Guillaume, 38054 GRENOBLE (FR)
(74) Mandataire: Bronchart, Quentin

(57) **Abrégé**

Système de récupération thermique d'un condenseur de distillation et procédé associé L'invention concerne un système de récupération d'énergie thermique comprenant : un module de condensation d'un solvant issu d'un dispositif de distillation, et un module pour chauffer un fluide, caractérisé en ce que le module de condensation comprend un premier échangeur thermique et un deuxième échangeur thermique agencé en série, et que le système de récupération comprend un circuit fluidique, apte à recevoir un fluide caloporteur, configuré pour assurer la connexion thermique d'au moins le premier échangeur thermique avec le gaz à chauffer de sorte à transférer l'énergie thermique du module de condensation au gaz à chauffer. La présente invention concerne le domaine de la récupération thermique. En particulier, l'invention s'applique à un dispositif de distillation plus précisément au niveau d'un condenseur d'un dispositif de distillation et donc de condensation générant des pertes thermiques pouvant être récupérées et utilisées localement, par exemple dans les distilleries, les machines de nettoyage de métaux et de pièces industriels ou de nettoyage à sec, dans lequel l'énergie thermique est récupérée au niveau du condenseur du dispositif de distillation pour la transférer à une circulation d'air dans un tambour de séchage.

## Description

### DOMAINE TECHNIQUE

La présente invention concerne le domaine de la récupération thermique. En particulier, l'invention s'applique à un dispositif de distillation plus précisément au niveau d'un condenseur d'un dispositif de distillation pour récupérer l'énergie thermique et la transférer à un module utilisant cette énergie thermique. L'invention trouvera une application dans tous les domaines impliquant une étape de distillation et donc de condensation générant des pertes thermiques pouvant être récupérées et utilisées localement, par exemple dans les distilleries, les machines de nettoyage de métaux et de pièces industriels. Elle trouvera encore pour application particulièrement avantageuse le domaine du nettoyage à sec, dans lequel l'énergie thermique est récupérée au niveau du condenseur du dispositif de distillation pour la transférer à une circulation d'air dans un tambour de séchage.

### ÉTAT DE LA TECHNIQUE

L'optimisation écologique des appareils et process industriels est une démarche dans laquelle les industriels s'engagent de plus en plus. L'optimisation écologique, en plus d'avoir un effet positif sur l'environnement, contribue à l'image de l'entreprise. L'optimisation écologique passe couramment par une optimisation énergétique permettant une réduction des coûts.

Parmi les process industriels pouvant être optimisés, le procédé de distillation, consistant en un procédé de séparation d'un mélange de substances liquides présentant des températures d'ébullition différentes, utilise de l'énergie pour chauffer le liquide de sorte à vaporiser successivement les substances liquides, puis utilise de l'énergie pour refroidir et liquéfier les vapeurs et obtenir un distillat.

Ce procédé de distillation est donc particulièrement consommateur d'énergie et couramment grand consommateur d'eau.

Un objet de la présente invention est donc de proposer un système et un procédé d'optimisation énergétique associé au procédé de distillation.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, l'invention concerne un système de récupération d'énergie thermique comprenant : un module de condensation d'un solvant issu d'un dispositif de distillation, et un gaz à chauffer, le système étant tel que le module de condensation comprend un premier échangeur thermique et un deuxième échangeur thermique agencés en série, avantageusement configurés pour que le solvant circule successivement dans le premier échangeur thermique puis dans le deuxième échangeur thermique, et tel que le système de récupération comprend un circuit fluidique, apte à recevoir un fluide caloporteur, configuré pour assurer la connexion thermique d'au moins le premier échangeur thermique avec le gaz à chauffer de sorte à transférer l'énergie thermique du module de condensation au gaz à chauffer.

Le système de récupération est en outre tel que le module de condensation comprend en outre un circuit de refroidissement apte à recevoir un fluide de refroidissement et agencé au moins au niveau du deuxième échangeur thermique. Le module de condensation est ainsi configuré pour compléter la condensation et/ou le refroidissement du solvant.

La présente invention présente ainsi l'avantage d'utiliser l'énergie thermique issue de la condensation du solvant par le système de récupération pour chauffer un gaz réutilisable par exemple dans le dispositif de distillation ou un dispositif connexe. De plus, le système selon l'invention permet de réduire la consommation d'eau, classiquement utilisée dans les dispositifs de distillation, en utilisant le circuit fluidique, au moins partiellement, comme une source de refroidissement du module de condensation.

La présente invention permet une optimisation des flux et une récupération des calories rejetées pour refroidir le solvant après distillation.

Le système de récupération selon l'invention permet ainsi de réduire la consommation d'électricité et la consommation d'eau de machine utilisant un process de distillation et avantageusement un séchage et/ou un chauffage et plus particulièrement les consommations d'une machine de nettoyage par exemple.

De manière facultative, le système de récupération thermique peut en outre présenter au moins l'une quelconque des caractéristiques suivantes :
Avantageusement, le gaz à chauffer est un gaz tel que de l'air. Préférentiellement l'air étant utilisé dans un module de séchage ou de chauffage.
Un autre aspect concerne un procédé de récupération d'énergie thermique par le système tel que décrit précédemment et tel qu'il comprend les étapes successives suivantes : condensation d'un solvant issu d'un dispositif de distillation dans un module de condensation, transfert d'énergie thermique dans au moins un premier échangeur du module de condensation entre le solvant et un gaz à chauffer, avantageusement par un fluide caloporteur d'un circuit fluidique.
Avantageusement, le procédé selon l'invention comprend une étape de distillation concomitante au moins partiellement avec une étape de séchage ou de chauffage par le gaz à chauffer.
Selon une possibilité avantageuse, le procédé selon l'invention comprend une phase de refroidissement du gaz à chauffer de sorte avantageusement à refroidir une enceinte de nettoyage.
La présente invention permet de s'affranchir au moins partiellement et préférentiellement totalement, de moyens de chauffage, notamment électrique tel que des résistances chauffantes pour chauffer le fluide caloporteur utilisé avantageusement pour le séchage ou le chauffage.
Un autre aspect concerne une machine de nettoyage comprenant un système de récupération d'énergie tel que décrit précédemment dans laquelle le solvant issu du dispositif de distillation est un solvant de nettoyage.
Un autre aspect concerne une machine de nettoyage à sec comprenant un système de récupération d'énergie tel que décrit précédemment.
Un autre aspect concerne une machine de dégraissage de pièces métalliques industrielles comprenant un système de récupération d'énergie tel que décrit précédemment.
L'invention trouvera une application dans la gestion énergétique de machine de nettoyage notamment de nettoyage à sec présente dans les pressings.
La machine selon l'invention permet d'assurer des fonctionnalités actuelles à savoir de nettoyage, le séchage et la régénération du solvant sans dégrader les fonctions de ladite machine et en ayant un coût de mise en œuvre adapté à la durée de vie des machines.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma de principe d'un système de récupération d'énergie thermique selon un premier mode de réalisation
La figure 2 représente un schéma selon la figure 1 en cours d'étape de surchauffe du gaz à chauffer.
La figure 3 représente un schéma selon la figure 1 en absence d'étape de surchauffe.
La figure 4 représente un schéma selon la figure 1 en cours d'étape de refroidissement du gaz à chauffer.
La figure 5 représente un schéma de principe d'un système de récupération d'énergie thermique selon un deuxième mode de réalisation.
La figure 6 représente un schéma de principe d'une machine de nettoyage incorporant un système de récupération d'énergie selon l'invention et un dispositif de distillation.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Avantageusement, le gaz à chauffer est de l'air. L'air pouvant être utilisé dans un module d'utilisation d'un gaz chauffé par exemple dans un dispositif de séchage connexe tel que dans des machines de nettoyage à sec utilisant à la fois un dispositif de distillation pour la régénération d'un solvant de nettoyage et un dispositif de séchage pour le séchage des produits nettoyés, ou bien encore dans des machines de dégraissage utilisant également un dispositif de distillation pour la régénération d'un solvant de nettoyage et un dispositif de séchage pour le séchage des pièces dégraissées.

Avantageusement, le circuit fluidique est configuré pour assurer une circulation d'air dans le premier échangeur thermique du module de condensation de sorte à assurer le chauffage de l'air. L'air est ainsi chauffé directement dans le premier échangeur thermique du module de condensation par récupération de l'énergie thermique du solvant lors de sa condensation. Puis l'air est utilisé dans le module d'utilisation du gaz chauffé, par exemple pour le séchage de pièces ou de produits. Ce transfert de l'énergie thermique directement entre le solvant et le gaz à chauffer tel que de l'air, lors de la condensation du solvant, permet d'augmenter le transfert de calories entre le solvant et le gaz à chauffer.

Avantageusement, le système comprend un module de transfert de chaleur entre le circuit fluidique et le gaz à chauffer, le circuit fluidique étant configuré pour assurer le couplage thermique entre le module de condensation et le module de transfert de la chaleur. Selon cette disposition, le circuit fluidique est un circuit intermédiaire entre le module de condensation et le gaz à chauffer. Cette disposition permet d'intégrer le système de récupération dans une machine existante avec des modifications mineures de l'architecture.

Avantageusement, le module pour transférer la chaleur est un échangeur thermique assurant le transfert de chaleur entre le circuit fluidique et le gaz à chauffer.

Avantageusement, l'échangeur thermique est un surchauffeur d'air, avantageusement issu d'une pompe à chaleur, préférentiellement l'air étant destiné au séchage. Selon cette disposition, le surchauffeur d'air est agencé sur une circulation d'air en sortie d'une pompe à chaleur permettant d'augmenter la température du flux d'air issu de la pompe à chaleur avant son utilisation telle que par exemple pour le séchage de produits ou de pièces.

Avantageusement, le module de condensation comprend un circuit de refroidissement apte à recevoir un fluide de refroidissement et agencé au moins au niveau du deuxième échangeur thermique. Selon cette possibilité, la circulation d'un fluide de refroidissement au moins au niveau du deuxième échangeur du module de condensation permet d'assurer un contrôle de la température du solvant dans le module de condensation.

Avantageusement, le circuit de refroidissement et le circuit fluidique sont en connexion fluidique de sorte à introduire du liquide de refroidissement dans le circuit fluidique, le fluide caloporteur étant identique au fluide de refroidissement, tel que de l'eau, préférentiellement en fonction d'une température du solvant dans le module de condensation. Avantageusement, le système comprend un module de contrôle de la connexion fluidique entre le circuit de refroidissement et le circuit fluidique tel que par exemple des vannes trois voies. Les vannes trois voies permettent de piloter la puissance thermique transférer au module de transfert de chaleur. Les vannes trois voies permettent également de prélever des calories du gaz à chauffer pour refroidir celui-ci au niveau du module de transfert de chaleur. La vanne trois voies sert à répartir le débit entre l'échangeur 4 et le surchauffeur 8 pour contrôler les températures de l'air et du solvant.

Avantageusement, le procédé comprend le transfert d'énergie thermique entre le premier échangeur du module de condensation et le surchauffeur par l'intermédiaire d'un circuit fluidique, préférentiellement fermé.

Avantageusement, le procédé comprend une étape de refroidissement du gaz à chauffer comprenant la circulation du fluide de refroidissement dans le circuit fluidique de sorte à assurer le refroidissement du gaz à chauffer au niveau du module de transfert de chaleur. Avantageusement, cette étape de refroidissement est concomitante à la condensation du solvant dans le module de condensation.

Avantageusement, le procédé comprend le transfert d'énergie thermique dans le premier échangeur thermique directement entre le solvant et le gaz à chauffer.

Avantageusement, le procédé comprend la circulation d'un gaz à chauffer dans le module de condensation pour assurer le transfert d'énergie thermique du premier échangeur au gaz à chauffer.

Avantageusement, l'échangeur thermique est un surchauffeur agencé sur un circuit d'air en entrée d'un tambour de nettoyage configuré pour augmenter la température de l'air entrant dans le tambour.

Avantageusement, le solvant de nettoyage est destiné au nettoyage à sec de textile ou au dégraissage de pièces métalliques.

Il est précisé que dans le cadre de la présente invention, le terme « agencé sur», ou ses équivalents signifient «en connexion fluidique».

Dans la présente description, l'expression «A fluidiquement raccordé à B» est synonyme de «A est en connexion fluidique avec B» ne signifie pas nécessairement qu'il n'existe pas d'organe entre A et B. Les expressions «agencée sur» ou «sur» sont synonymes de « raccordé fluidiquement à».

L'amont et l'aval en un point donné sont pris en référence au sens de circulation du fluide dans le circuit.

L'invention concerne un système de récupération d'énergie thermique d'un dispositif de distillation pour le chauffage d'un gaz.

Le système de récupération comprend un module de condensation 1 d'un solvant 2 issu d'un dispositif de distillation.

Plus précisément, un dispositif de distillation comprend une source de chaleur pour assurer le changement d'état d'un solvant de l'état liquide en vapeur et un module de condensation assurant la condensation du solvant à l'état de vapeur.

Le solvant 2 est choisi parmi des hydrocarbures chlorés dont le perchloroéthylène ou des solvants fluorés tels que F113 ou encore des hydrofluorocarbures, ou du siloxane ou encore des solvants alternatifs.

Le système de récupération comprend un gaz à chauffer. Avantageusement, le système comprend un module l'utilisation d'un gaz chauffé. Le module d'utilisation d'un gaz chauffé est choisi parmi un module de séchage et/ou un module de chauffage.

Selon une possibilité préférée, le gaz à chauffer 7 est de l'air. Selon les applications du système de récupération, le gaz à chauffer 7, en l'espèce de l'air, est utilisé pour le séchage et/ou le chauffage.

Selon l'invention, le module de condensation 1 est bi-étagé. Le module de condensation 1 comprend deux étages. Plus précisément, le module de condensation 1 comprend un premier échangeur thermique 4 et un deuxième échangeur thermique 5 agencés en série de sorte que le solvant circule successivement dans le premier échangeur thermique 4 puis dans le deuxième échangeur thermique 5, c'est-à-dire que le premier échangeur thermique 4 et le deuxième échangeur thermique 5 sont agencés en série côté solvant. Le premier échangeur thermique 4 et le deuxième échangeur thermique 5 sont en connexion fluidique. Le module de condensation 1 comprend une entrée 10 de solvant 2 dans le premier échangeur thermique 4. Le module de condensation 1 comprend une sortie 11 de solvant 2 hors du deuxième échangeur thermique 5. Le solvant pénètre dans le premier échangeur thermique 4 à l'état gazeux et ressort du deuxième échangeur thermique 5 à l'état liquide. Avantageusement, la condensation du solvant 2 est réalisée totalement dans le premier échangeur thermique 4, le deuxième échangeur thermique 5 assurant le refroidissement du solvant 2 pour atteindre une température de consigne.

Le premier échangeur thermique 4 et le deuxième échangeur thermique 5 sont soient des échangeurs à plaques, soient des échangeurs tubes- calandre.

Selon l'invention, le système de récupération comprend un circuit fluidique 6 apte à recevoir un fluide caloporteur. Le circuit fluidique 6 est configuré pour assurer la connexion thermique entre au moins le premier échangeur thermique 4 et le gaz à chauffer 7. Le circuit fluidique 6 est destiné à participer au transfert des calories du solvant 2 vers le gaz à chauffer 7.

Selon un premier mode de réalisation, le système comprend un module de transfert de chaleur 8 agencé entre le circuit fluidique 6 et le gaz à chauffer 7. Le circuit fluidique 6 est configuré pour recevoir un fluide caloporteur assurant le transfert thermique entre le premier échangeur 4 du module de condensation 1 et le module de transfert de chaleur 8. Selon une possibilité préférée, le module de transfert de chaleur 8 comprend un échangeur thermique assurant le transfert entre le fluide caloporteur du circuit fluidique 6 et le gaz à chauffer 7 préférentiellement de l'air.

Selon ce premier mode de réalisation, le circuit fluidique 6 est un circuit intermédiaire. Préférentiellement, le circuit fluidique 6 est un circuit fermé. Le circuit fluidique 6 comprend avantageusement une pompe 16 configurée pour faire circuler le fluide caloporteur dans ledit circuit fluidique 6. La pompe 16 est préférentiellement contrôlée pour adapter le débit du fluide caloporteur en fonction de valeurs de consigne pour la température du solvant 2 en sortie 11 du module de condensation 1 et/ou pour la température du gaz à chauffer 7. Le circuit fluidique 6 comprend avantageusement une première connexion fluidique 14 configurée pour mettre en connexion fluidique le premier échangeur thermique 4 et le module de transfert de chaleur 8 et une deuxième connexion fluidique 15 configurée pour mettre en connexion fluidique le module de transfert de chaleur 5 et le premier échangeur thermique 4.

Le fluide caloporteur apte à circuler dans le circuit fluidique 6 est avantageusement de l'eau.

Le fluide de refroidissement est avantageusement un liquide de refroidissement et en particulier de l'eau. Ce choix permet d'utiliser le fluide caloporteur et le fluide de refroidissement dans les mêmes circuits fluidiques sans problème d'incompatibilité.

Selon une possibilité de l'invention, le module de transfert de chaleur 8 est un surchauffeur d'un gaz à chauffer, avantageusement issu d'une pompe à chaleur. Le surchauffeur est préférentiellement agencé sur un flux d'air à chauffer entre une pompe à chaleur et une enceinte d'utilisation, tel qu'un tambour de séchage.

Selon un deuxième mode de réalisation, le circuit fluidique 6 est configuré pour assurer la circulation de l'air 7 au travers du premier échangeur thermique 4 du module de condensation 1. Le transfert d'énergie thermique se fait directement entre le solvant 2 circulant dans le module de condensation 1 issu d'un dispositif de distillation et l'air à chauffer 7.

Le système comprend avantageusement un circuit de refroidissement 9. Le circuit de refroidissement 9 est configuré pour recevoir un fluide de refroidissement destiné à circuler au moins au niveau du deuxième échangeur thermique 5. Le circuit de refroidissement 9 permet de compléter la condensation et/ou le refroidissement du solvant 2. Le circuit de refroidissement 9 est contrôlé pour assurer une température de solvant 2 en sortie 11 du module de condensation 1 en fonction d'une température de consigne.

Selon une possibilité, le circuit de refroidissement 9 est configuré pour faire circuler le fluide caloporteur également dans le premier échangeur thermique 4. Le circuit de refroidissement 9 permet de remplacer ou compléter le circuit fluidique 6 dans le premier échangeur thermique 4 du module de condensation 1. Le circuit de refroidissement comprend des moyens de mise en circulation du fluide de refroidissement de sorte à assurer une circulation dans au moins le deuxième échangeur thermique 5 et éventuellement également dans le premier échangeur thermique 4.

Selon un mode de réalisation, le circuit de refroidissement 9 et le circuit fluidique 6 sont connectés fluidiquement. Dans ce mode de réalisation, le fluide caloporteur du circuit fluidique est avantageusement identique au fluide de refroidissement du circuit de refroidissement 9, préférentiellement de l'eau. Le circuit de refroidissement 9 peut ainsi alimenter le circuit fluidique en eau de sorte à contrôler la température du solvant 2 dans le premier échangeur thermique 4 et en sortie 11 du module de condensation 1.

Le circuit de refroidissement 9 comprend une entrée 12 dans le deuxième échangeur thermique 5 et une sortie 13 du deuxième échangeur thermique 5. Le circuit de refroidissement 9 comprend une sortie 3 du fluide de refroidissement hors du système de récupération.

Dans ce cas, le système de récupération comprend des branches de dérivation 19, 20 assurant la connexion fluidique du circuit fluidique 6 et du circuit de refroidissement 9. La connexion fluidique de ces deux circuits est contrôlée par un module de connexion fluidique comprenant au moins deux vannes plus précisément des vannes trois voies, dont une vanne trois voies 18 agencée entre la deuxième connexion fluidique 15 et la sortie 13 et l'autre vanne trois voies 17 agencée entre la première connexion fluidique 14 et la sortie 3.

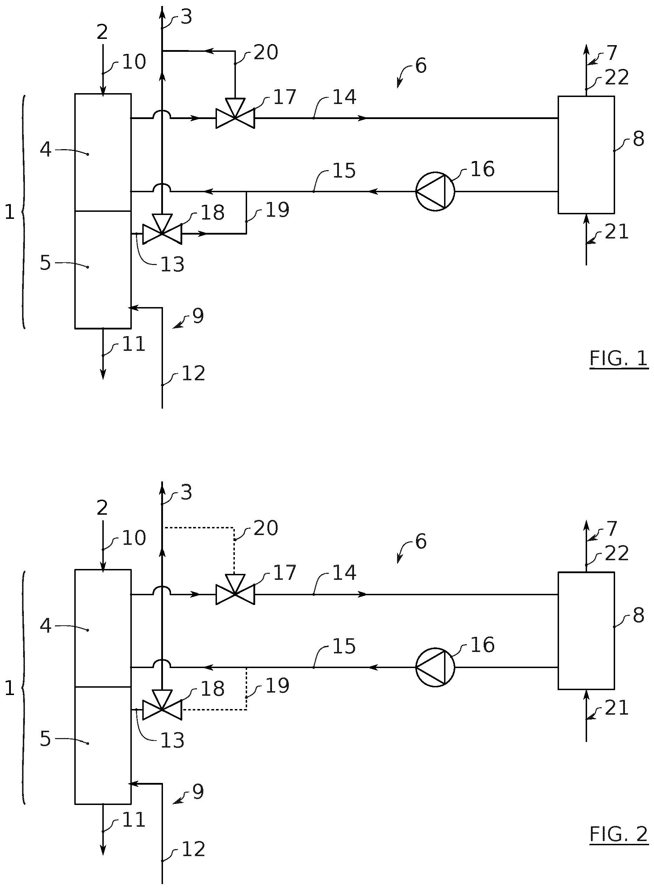

La figure 1 illustre la structure d'un système de récupération selon un premier mode de réalisation de l'invention.

Le solvant pénètre dans le premier échangeur thermique 4 par l'entrée 10 à l'état gazeux et ressort du deuxième échangeur thermique 5 par la sortie 11 à l'état liquide.

Selon ce mode de réalisation, le circuit fluidique 6 est agencé entre le module de condensation 1 et le module de transfert de chaleur 8. Le circuit fluidique 6 est agencé entre le premier échangeur thermique 4 est un échangeur de chaleur 8, avantageusement un surchauffeur. L'échangeur de chaleur 8 est configuré pour assurer le transfert d'énergie thermique entre le gaz à chauffer 7, préférentiellement de l'air, et le fluide caloporteur du circuit fluidique 6. Le circuit fluidique 6 comprend la première connexion fluidique 14 entre le premier échangeur thermique 4 et l'échangeur de chaleur 8 et la deuxième connexion fluidique 15 entre l'échangeur de chaleur 8 et le premier échangeur thermique 4.

Le circuit de refroidissement 9 comprend une entrée 12 agencée au niveau du deuxième échangeur thermique 5 et une sortie 13 agencée en sortie du deuxième échangeur thermique 5.

Le système de récupération comprend un module de connexion fluidique du circuit de refroidissement 9 et du circuit fluidique 6. Le module de connexion fluidique comprend une vanne trois voies 18 et une branche de dérivation 19 configurée pour assurer la connexion fluidique de la sortie 13 du circuit de refroidissement 9 et de la deuxième connexion fluidique 15 du circuit fluidique 6. La vanne trois voies 18 est configurée pour que la troisième voie soit connectée fluidiquement à une sortie 3 du fluide de refroidissement hors du système de récupération. Le module de connexion fluidique comprend également une deuxième vanne trois voies 17 et une branche de dérivation 20 configurée pour assurer la connexion fluidique du circuit fluidique 6 à la sortie 3. La deuxième vanne trois voies 17 est agencée sur la première connexion fluidique 14 du circuit fluidique 6, la troisième voie étant connectée fluidiquement à la branche de dérivation 20 connectée fluidiquement à la sortie 3.

L'entrée 12 du circuit de refroidissement 9 est connectée fluidiquement au deuxième échangeur thermique 5. Le deuxième échangeur thermique 5 est connecté fluidiquement à la sortie 13 du circuit de refroidissement 9. La sortie 13 est connectée fluidiquement à une voie de la vanne trois voies 18. Une voie de la vanne trois voies 18 est connectée à la sortie 3. Une autre voie de la vanne trois voies 18 est connectée fluidiquement à la branche de dérivation 19. La branche de dérivation 19 est connectée fluidiquement à la deuxième connexion fluidique 15 du circuit fluidique 6. La deuxième connexion fluidique 15 est connectée fluidiquement au premier échangeur thermique 4. La pompe 16 est agencée sur la connexion fluidique 15. Le premier échangeur thermique 4 est connecté fluidiquement à la première connexion fluidique 14. La vanne trois voies 17 est agencée sur la première connexion fluidique 14. Une voie de la vanne trois voies 17 est connectée fluidiquement à la branche de dérivation 20. La branche de dérivation 20 est connectée fluidiquement à la sortie 3. Une voie de la vanne trois voies 17 est connectée fluidiquement au module de transfert de chaleur 8 par la connexion fluidique 14 et le module de transfert de chaleur 8 est connecté fluidiquement à une voie de la vanne trois voies 18 par la deuxième connexion fluidique 15.

La figure 2 illustre une étape de chauffe voir de surchauffe du gaz à chauffer 7. Le fonctionnement du système de récupération selon cette figure est décrit ci-après.

Le solvant 2 pénètre dans le module de condensation 1 par l'entrée 10. Le solvant 2 est à l'état gazeux et pénètre dans le premier échangeur thermique 4. Dans le premier échangeur thermique 4, le solvant 2 à l'état gazeux transfert son énergie thermique au fluide caloporteur du circuit fluidique 6 circulant dans ledit premier échangeur thermique 4, avantageusement à contre-courant de la circulation du solvant 2. Le transfert d'énergie thermique assure ainsi la condensation au moins partielle du solvant 2. Le solvant 2 ressort du premier échangeur 4 à une température plus basse que sa température d'entrée dans le module de condensation 1. Le solvant 2 circule ensuite dans le deuxième échangeur thermique 5 du module de condensation 1. Dans le deuxième échangeur thermique 5, la condensation du solvant 2 est éventuellement complétée. Avantageusement, le solvant 2 est refroidi par transfert de calories vers le fluide de refroidissement du circuit de refroidissement 9 circulant dans le deuxième échangeur thermique 5, avantageusement à contre-courant de la circulation du solvant 2. Le solvant 2 ressort du module de condensation 1 par la sortie 11 à l'état liquide, avantageusement à une température de consigne.

Le fluide caloporteur du circuit fluidique 6 ayant récupéré les calories du solvant 2 au niveau du premier échangeur thermique 4 circule ensuite dans le circuit fluidique 6, en particulier dans la connexion fluidique 14, en direction du module de transfert de chaleur 8, en l'espèce un surchauffeur. Dans le module de transfert 8, le fluide caloporteur transfert ses calories vers le gaz à chauffer 7, en l'espèce de l'air traversant le module de transfert de chaleur 8. Le fluide caloporteur, ayant cédé ses calories, ressort du module de transfert de chaleur 8 et circule dans la connexion fluidique 15, en direction du premier échangeur thermique 4 en étant avantageusement mise en circulation par la pompe 16. Selon cette figure 2, le circuit fluidique 6 est un circuit fermé, le fluide caloporteur circulant en circuit fermé entre le premier échangeur thermique 4 et le module de transfert de chaleur 8.

Le fluide de refroidissement du circuit de refroidissement 9 pénètre dans le deuxième échangeur thermique 5 par l'entrée 12, circule au travers du deuxième échangeur thermique 5 de sorte à récupérer des calories du solvant 2 circulant dans le deuxième échangeur thermique 5, avantageusement à contre-courant, puis le fluide de refroidissement ressort du deuxième échangeur thermique 5 par la sortie 13 à une température supérieure à sa température d'entrée 12.

Au niveau du module de transfert de chaleur 8, le gaz à chauffer 7, en l'espèce l'air, pénètre par une entrée 21 et ressort par une sortie 22.

### Exemple 1

À titre d'exemple, selon un mode de réalisation illustré à la figure 2, un système de récupération selon l'invention est mis en œuvre dans une machine de nettoyage à sec avec les paramètres suivants. Le fluide caloporteur et le fluide de refroidissement étant de l'eau. Le module de transfert de chaleur 8 étant un surchauffeur d'air 7.

**[Tableau 1]**

| | |
|---|---|
| température solvant 2 en entrée 10 du module de condensation 1 | 125 °C |
| température solvant 2 en sortie du premier échangeur thermique 4 | 60 °C |
| température solvant 2 en sortie 11 du module de condensation 1 | 20 °C |
| puissance du premier échangeur thermique 4 | 5 à 6 kW |
| puissance du deuxième échangeur thermique 5 | 0,5 à 1,5 kW |
| pression dans le circuit fluidique 6 | 2 bars |
| température du fluide caloporteur dans la connexion fluidique 15 du circuit fluidique 6 | 80 °C |
| température du fluide caloporteur dans la connexion fluidique 14 du circuit fluidique 6 | 55 °C |
| température de l'eau en entrée 12 du circuit de refroidissement 9 | 15 °C |
| pression de l'eau en entrée 12 du circuit de refroidissement 9 | 5 bars |
| pression de l'eau en sortie 13 du circuit de refroidissement 9 | 1 bar |
| température de l'air en entrée 21 du surchauffeur 8 | 50°C |
| température de l'air en sortie 22 du surchauffeur 8 | 70 °C |
| puissance du surchauffeur | 5 à 6,5 kW |

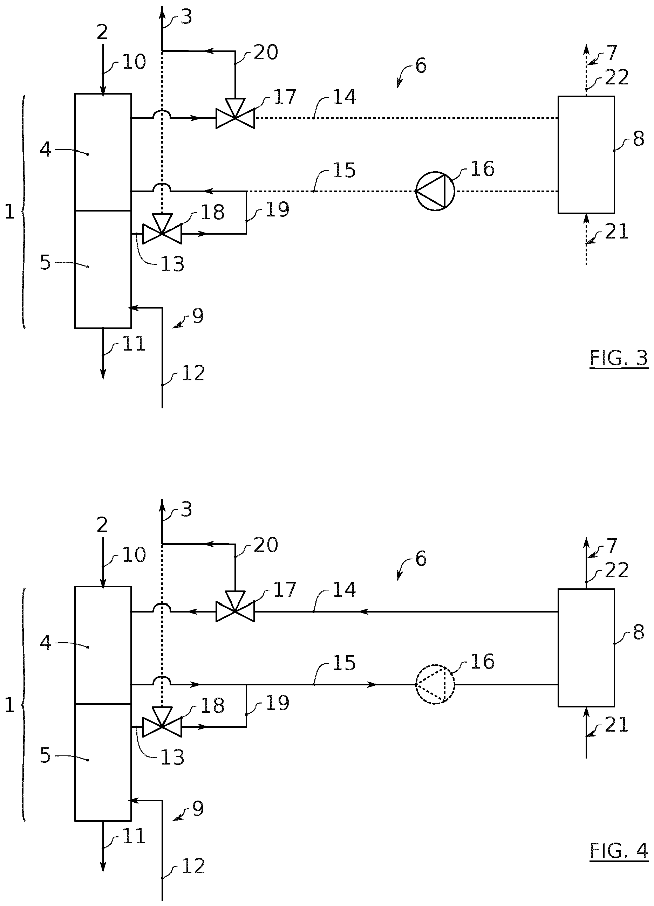

A la figure 3, est illustré le système lorsque la condensation, ou au moins un refroidissement, du solvant 2 est encore nécessaire, mais que la récupération d'énergie thermique n'est plus nécessaire, notamment, que le chauffage du gaz à chauffer 7 n'est plus nécessaire. Dans ce cas-là, le circuit fluidique 6 ne récupère plus d'énergie thermique pour la transférer à un module de transfert de chaleur 8. Le fluide caloporteur du circuit fluidique 6 ne circule plus, avantageusement la pompe 16 du circuit fluidique est arrêtée. Le circuit de refroidissement 9 est en fonctionnement. Le fluide de refroidissement pénètre dans le deuxième échangeur thermique 5 par l'entrée 12 puis circule dans le deuxième échangeur thermique 5 puis dans le premier échangeur thermique 4, avant de ressortir du système de récupération par la sortie 3. Selon la possibilité illustrée, la connexion fluidique du circuit de refroidissement 9 entre le deuxième échangeur thermique 5 et le premier échangeur thermique 4 se fait par la vanne trois voies 18 assurant la connexion fluidique entre la sortie 13 du fluide de refroidissement hors du deuxième échangeur thermique 5 et la dérivation 19 connectée fluidiquement à la deuxième connexion fluidique 15 du circuit fluidique 6. Après avoir circulé dans le premier échangeur thermique 4, le fluide de refroidissement ressort par la première connexion fluidique 14 du circuit fluidique 6 connecté fluidiquement par la vanne trois voies 17 à la branche de dérivation 20 connectée fluidiquement à la sortie 3.

Selon un mode de réalisation de l'invention illustré à la figure 4, le système de récupération d'énergie thermique permet également de refroidir le gaz à chauffer 7. Selon ce mode de réalisation, le circuit de refroidissement 9 est connecté fluidiquement au circuit fluidique 6 de sorte à abaisser la température du fluide caloporteur du circuit fluidique 6. En fonctionnement, le solvant 2 circule de manière identique à ce qui est décrit en figures 2 et 3, le fluide de refroidissement pénètre dans le deuxième échangeur thermique 5 par l'entrée 12 puis ressort du deuxième échangeur thermique 5 par la sortie 13 connectée fluidiquement par la vanne trois voies 18 à la branche de dérivation 19 assurant la connexion fluidique du circuit de refroidissement au circuit fluidique 6, en particulier la deuxième connexion fluidique 15. Le fluide de refroidissement circule ensuite dans le circuit fluidique 6 en direction du surchauffeur 8 assurant ainsi le refroidissement du gaz à chauffer 7, en l'espèce de l'air. Le fluide de refroidissement ressort du surchauffeur 8 et circule en direction du premier échangeur thermique 4, en particulier par la première connexion fluidique 14. Le système tel qu'illustré, comprend au moins deux vannes trois voies 17, 18 agencées à la jonction du circuit fluidique 6 et du circuit de refroidissement de sorte à contrôler la connexion fluidique de ces deux circuits.

Dans ce mode de réalisation, les paramètres du système sont identiques à ce qui est décrit en référence aux figures 2 et 3 hormis la température de l'air en entrée 21 du surchauffeur 8 qui est de l'ordre de 50 °C et la température de l'air en sortie 22 du surchauffeur 8 qui est de l'ordre de 30 °C.

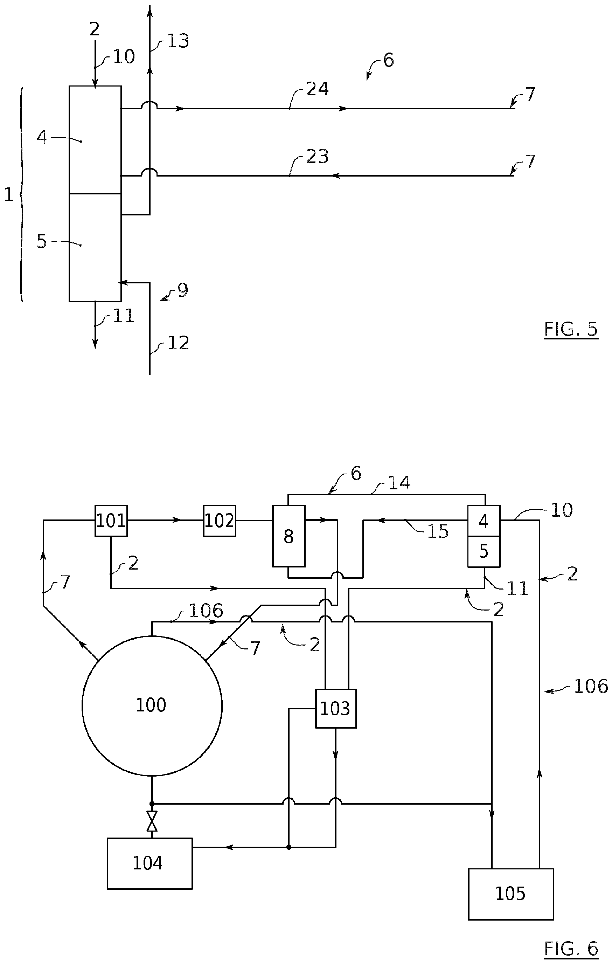

La figure 5 illustre un système selon un deuxième mode de réalisation de l'invention dans lequel le gaz à chauffer 7 circule directement au niveau du premier échangeur thermique 4. Le système selon ce mode de réalisation comprend un circuit fluidique 6 apte à recevoir le gaz à chauffer 7, en l'espèce ici de l'air. L'air 7 pénètre dans le premier échangeur thermique 4 par une entrée 23, circule avantageusement à contre-courant du solvant 2 circulant dans le premier échangeur thermique 4, avant de ressortir du premier échangeur thermique 4 par une sortie 24. Le deuxième échangeur thermique 5 comprend la circulation du fluide de refroidissement du circuit de refroidissement 9. Le fluide de refroidissement pénètre dans le deuxième échangeur thermique 5 par l'entrée 12 puis ressort du deuxième échangeur thermique par la sortie 13.

Selon une application de l'invention, le système de récupération d'énergie thermique est utilisé dans une machine de nettoyage comprenant un solvant de nettoyage et une étape de séchage. À titre d'exemple préféré, la machine de nettoyage est une machine de nettoyage à sec pour textile. Selon une possibilité, la machine de nettoyage est une machine de nettoyage de pièces métalliques, également dénommée machine de dégraissage.

La machine de nettoyage à sec pour textile comprend telle qu'illustrée en figure 6 une enceinte 100 destinée à recevoir les textiles à nettoyer. L'enceinte est également dénommée tambour. Une première étape de nettoyage textile est réalisée. Un solvant est injecté dans le tambour pour nettoyer les textiles. Ensuite, une étape de séchage des textiles comprenant l'injection d'air 7 chaud dans le tambour 100 assurant l'évaporation du solvant 2 qui est emporté par le flux 7 d'air chaud. Le flux d'air 7 chaud circulant avantageusement dans un premier filtre puis dans un évaporateur 101 d'une pompe à chaleur assurant la condensation du solvant qui est récupéré, puis dans un condenseur 102 permettant de réchauffer l'air 7 avant sa réintroduction dans le tambour 100. Avantageusement, l'air 7 traverse un surchauffeur 8 après le condenseur 102 et avant sa réintroduction dans le tambour 100 de sorte à augmenter sa température en entrée du tambour. Une partie du solvant 2 est évacuée du tambour 100 par une canalisation indépendante 107 en partie supérieure du tambour 100. Le solvant 2 subit avantageusement une distillation par un module de distillation assurant le recyclage du solvant de sorte à le séparer de l'humidité éventuelle et des souillures récupérées au contact des textiles. Le solvant est ensuite éventuellement filtré puis distillé par un distillateur. Le distillateur 105 assure le chauffage du solvant 2 de sorte qu'il passe à l'état gazeux. Le solvant 2 à l'état gazeux remonte alors dans une cheminée de distillation 106 avant de traverser le module de condensation 1 permettant d'assurer le passage de l'état gazeux à l'état liquide du solvant 2 assurant ainsi sa récupération. Le solvant 2 issu du module de condensation et de l'évaporateur 101 de la pompe à chaleur est réuni puis éventuellement séparé du reste des éléments indésirables par un séparateur 103 puis le solvant 2 est stocké dans un réservoir 104.

Une machine de nettoyage comprend au moins deux phases : une phase de lavage lors de laquelle le solvant est mis en contact avec le textile ou les pièces à nettoyer et une phase de séchage, notamment par l'usage d'une pompe à chaleur. Avantageusement, la machine de nettoyage comprend en tout quatre phases : la phase de lavage, une phase d'essorage durant laquelle le solvant est enlevé des textiles des pièces nettoyées par centrifugation, une phase de refroidissement de l'enceinte nettoyage tel que le tambour afin d'assurer un accès à l'intérieur de l'enceinte en toute sécurité. L'étape de distillation vient en complément afin de séparer le solvant des impuretés et de l'eau qui s'y sont mélangées durant la phase de lavage.

Lors de la phase de séchage, une pompe à chaleur est mise en route permettant de refroidir, par un évaporateur 101, l'air 7 chargé de solvant issu de l'enceinte 100 de nettoyage. Le solvant 2 est séparé de l'air 7 par condensation et l'air 7 séparé peut-être réchauffé dans un condenseur 102 de la pompe à chaleur. Avantageusement, l'air 7 issu du condenseur 102 traverse un surchauffeur 8 afin de maintenir la température de l'enceinte 100 de nettoyage. Le solvant 2 présent dans l'enceinte 100 de nettoyage s'évapore au contact de l'air 7 sec.

Dans le cas d'une machine de dégraissage, le principe est identique à une machine de nettoyage à sec.

L'invention n'est pas limitée aux modes de réalisations précédemment décrits et s'étend à tous les modes de réalisation couverts par les revendications.

### Liste des références

- 1: module de condensation
- 2: solvant
- 3: sortie fluide de refroidissement hors du deuxième échangeur thermique
- 4: premier échangeur thermique
- 5: deuxième échangeur thermique
- 6: circuit fluidique
- 7: gaz à chauffer
- 8: module de transfert de chaleur
- 9: circuit de refroidissement
- 10: entrée solvant
- 11: sortie solvant
- 12: entrée fluide de refroidissement
- 13: sortie fluide de refroidissement
- 14: connexion fluidique entre le premier échangeur et le module de transfert de chaleur
- 15: connexion fluidique entre le module de transfert de chaleur et le premier échangeur
- 16: pompe
- 17: vanne trois voies
- 18: vanne trois voies
- 19: branche de dérivation
- 20: branche de dérivation
- 21: entrée du gaz à chauffer
- 22: sortie du gaz à chauffer
- 23: entrée du gaz à chauffer
- 24: sortie du gaz à chauffer
- 100: tambour
- 101: évaporateur pompe à chaleur
- 102: condenseur pompe à chaleur
- 103: séparateur solvant
- 104: réservoir
- 105: distillateur
- 106: cheminée de distillation
- 107: canalisation d'évacuation du solvant à l'état gazeux

## Revendications

1. Système de récupération d'énergie thermique comprenant un module de condensation (1) d'un solvant (2) issu d'un dispositif de distillation, et un gaz à chauffer (7),
dans lequel le module de condensation (1) comprend un premier échangeur thermique (4) et un deuxième échangeur thermique (5) agencé en série, et que le système de récupération comprend un circuit fluidique (6), apte à recevoir un fluide caloporteur, configuré pour assurer la connexion thermique d'au moins le premier échangeur thermique (4) avec le gaz à chauffer (7) de sorte à transférer l'énergie thermique du module de condensation (1) au gaz à chauffer (7),
le système de récupération étant **caractérisé en ce que** le module de condensation (1) comprend en outre un circuit de refroidissement (9) apte à recevoir un fluide de refroidissement et agencé au moins au niveau du deuxième échangeur thermique (5) de sorte à compléter la condensation et/ou le refroidissement du solvant (2).

2. Système selon la revendication précédente dans lequel le gaz à chauffer (7) est de l'air et dans lequel le circuit fluidique (6) est configuré pour assurer une circulation d'air (7) dans le premier échangeur thermique (4) du module de condensation (1) de sorte à assurer le chauffage de l'air (7).

3. Système selon la revendication 1 comprenant un module de transfert de chaleur (8) agencé entre le circuit fluidique (6) et le gaz à chauffer (7), le circuit fluidique (6) étant configuré pour assurer le couplage thermique entre le module de condensation (1) et le module de transfert de la chaleur (8).

4. Système selon la revendication précédente dans lequel le module de transfert de chaleur (8) est un échangeur thermique assurant le transfert de chaleur entre le circuit fluidique (6) et le gaz à chauffer (7).

5. Système selon la revendication précédente dans lequel le module pour transférer la chaleur (8) est un échangeur thermique destiné à surchauffer l'air (7).

6. Système selon la revendication précédente dans lequel le circuit de refroidissement (9) et le circuit fluidique (6) sont en connexion fluidique de sorte à introduire du fluide de refroidissement dans le circuit fluidique (6).

7. Système selon l'une quelconque des revendications précédentes, dans lequel le circuit fluidique (6) comprend une pompe (16) configurée pour faire circuler le fluide caloporteur dans ledit circuit fluidique (6) et une première connexion fluidique (14) configurée pour mettre en connexion fluidique le premier échangeur thermique (4) et le module de transfert de chaleur (8) et une deuxième connexion fluidique (15) configurée pour mettre en connexion fluidique le module de transfert de chaleur (8) et le premier échangeur thermique (4), et le système comprend en outre des premières et deuxième branches de dérivation (19, 20) assurant une connexion fluidique du circuit fluidique (6) et du circuit de refroidissement (9), la connexion fluidique de ces deux circuits étant contrôlée par un module de connexion fluidique comprenant au moins deux vannes trois voies (18, 17), dont une première vanne trois voies (18) est agencée entre la deuxième connexion fluidique (15) et une sortie (13) du deuxième échangeur thermique (5) via la première branche de dérivation (19) et une deuxième vanne trois voies (17) est agencée entre la première connexion fluidique (14) et une sortie du premier échangeur thermique (4), une troisième voie de la première vanne trois voies (18) étant connectée fluidiquement à une sortie (3) du fluide de refroidissement hors du système de récupération et une troisième voie de la deuxième vanne trois voies (17) étant connectée fluidiquement à la sortie (3) via la deuxième branche (20).

8. Procédé de récupération d'énergie thermique par le système selon l'une quelconque des revendications précédentes **caractérisé en ce qu'**il comprend les étapes successives suivantes :
- condensation d'un solvant (2) issu d'un distillateur dans un module de condensation (1),
- transfert d'énergie thermique au moins dans un premier échangeur thermique (4) du module de condensation (1) entre le solvant et un gaz à chauffer (7), et
- le transfert d'énergie thermique entre le premier échangeur thermique (4) du module de condensation (1) et le module de transfert de chaleur (8) par l'intermédiaire d'un circuit fluidique (6).

9. Procédé de récupération d'énergie thermique selon la revendication précédente comprenant une étape de refroidissement du gaz à chauffer (7) comprenant la circulation du fluide de refroidissement dans le circuit fluidique (6) de sorte à assurer le refroidissement du gaz à chauffer (7) au niveau du module de transfert de chaleur (8).

10. Procédé de récupération d'énergie thermique selon la revendication 8 comprenant le transfert d'énergie thermique dans le premier échangeur thermique (4) du module de condensation (1) directement entre le solvant et un gaz à chauffer (7).

11. Procédé de récupération d'énergie thermique selon la revendication 8 en combinaison de la revendication 7 comprenant l'arrêt de la pompe (16) et le fonctionnement du circuit de refroidissement (9) de sorte que le fluide de refroidissement pénètre dans le deuxième échangeur thermique (5) par une entrée (12) du circuit de refroidissement (9) agencée au niveau du deuxième échangeur thermique (5), puis circule dans le deuxième échangeur thermique (5), puis dans le premier échangeur thermique (4), avant de ressortir du système de récupération par la sortie (3), la connexion fluidique du circuit de refroidissement (9) entre le deuxième échangeur thermique (5) et le premier échangeur thermique (4) se faisant par la première vanne trois voies (18) et la première branche de dérivation (19) et la connexion fluidique entre le premier échangeur thermique (4) et la sortie (3) se faisant par la première connexion fluidique (14) du circuit fluidique (6) connecté fluidiquement par la deuxième vanne trois voies (17) à la deuxième branche de dérivation (20) connectée fluidiquement à la sortie (3).

12. Procédé de récupération d'énergie thermique selon la revendication 8 en combinaison de la revendication 7, comprenant la connexion fluidique du circuit de refroidissement (9) à la deuxième connexion fluidique (15) du circuit fluidique (6) via la première vanne trois voies (18) et la première branche de dérivation (19), de sorte que le fluide de refroidissement, après avoir pénétré dans le deuxième échangeur thermique (5) par l'entrée (12), en ressorte par la sortie (13) connectée fluidiquement par la vanne trois voies 18 et la première branche de dérivation (19), puis circule ensuite en direction du module de transfert de chaleur (8) assurant ainsi le refroidissement du gaz à chauffer (7), le fluide de refroidissement ressort ensuite du module de transfert de chaleur (8) et circule par la première connexion fluidique 14 jusqu'à la deuxième vanne trois voies (17) en connexion fluidique avec la sortie (3) via la deuxième branche de dérivation (20).

13. Machine de nettoyage comprenant un système de récupération d'énergie selon l'une quelconque des revendications 1 à 8 dans laquelle le solvant issu du dispositif de distillation est un solvant de nettoyage.

14. Machine de nettoyage selon la revendication précédente dans laquelle le module de transfert de chaleur (8) est un surchauffeur agencé sur un circuit d'air en entrée d'un tambour de nettoyage configuré pour augmenter la température de l'air entrant dans le tambour.

15. Machine de nettoyage selon l'une quelconque des deux revendications précédentes dans laquelle le solvant de nettoyage est destiné au nettoyage à sec de textile ou au dégraissage de pièces industrielles.
